Europäisches Patentamt

European Patent Office

Office européen des brevets

(19)

(11) Veröffentlichungsnummer: **0 223 981**
**B1**

(12) # EUROPÄISCHE PATENTSCHRIFT

(45) Veröffentlichungstag der Patentschrift:
25.07.90

(51) Int. Cl.⁵: **B25B 11/00,** B25H 1/10

(21) Anmeldenummer: 86113724.8

(22) Anmeldetag: 03.10.86

(54) Werkstückhaltevorrichtung.

(30) Priorität: 26.11.85 DE 3541638

(43) Veröffentlichungstag der Anmeldung:
03.06.87 Patentblatt 87/23

(45) Bekanntmachung des Hinweises auf die Patenterteilung:
25.07.90 Patentblatt 90/30

(84) Benannte Vertragsstaaten:
AT BE CH DE ES FR GB IT LI LU NL SE

(56) Entgegenhaltungen:
US-A- 2 444 727
US-A- 3 205 522

(73) Patentinhaber: Siniko, Josip, Ehrenmalstrasse 87,
6954 Hassmersheim(DE)

(72) Erfinder: Siniko, Josip, Ehrenmalstrasse 87,
6954 Hassmersheim(DE)

(74) Vertreter: Hach, Hans Karl, Dr., Tarunstrasse 23,
D-6950 Mosbach-Waldstadt(DE)

ACTORUM AG

## Beschreibung

Die Erfindung betrifft eine Werkstückhaltevorrichtung mit einem an einer Werkbank montierbaren Standfuß, mit einem am Standfuß um eine erste Achse schwenkbar gelagerten Zwischenträger, mit einem am Zwischenträger um eine zur ersten Achse senkrechten zweiten Achse schwenkbar gelagerten Spannfutterträger, mit einem am Spannfutterträger um eine zur zweiten Achse senkrechte dritte Achse schwenkbar gelagerten Werkstückhalter und mit einer Klemmvorrichtung zum Festklemmen von Standfuß, Zwischenträger, Spannfutterträger und Werkstückhalter in der jeweils eingestellten gegenseitigen Schwenkstellung, wobei die Klemmvorrichtung den Spannfutterträger in eine Gegenfläche des Zwischenträgers zieht und als Kraftabstützung demgegenüber den Standfuß gegen den Zwischenträger zieht.

Bei einer aus der US-PS 2 444 727 bekannten Vorrichtung dieser Art ist der Zwischenträger auf dem Umfang eines Rohres schwenkbar gelagert. Das hat zur Folge, daß beim Lösen der Klemmvorrichtung das ganze Oberteil zur Seite kippt, wenn sich die Teile nicht zufällig in der Balance befinden. Das läuft praktisch darauf hinaus, daß man die Schwenkbarkeit des Zwischenträgers auf dem Rohr nicht nutzen kann.

Aufgabe der Erfindung ist es, eine Vorrichtung der eingangs genannten Art so auszugestalten, daß der Werkstückhalter mit möglichst vielen Freiheitsgraden einstellbar ist.

Die Erfindung löst diese Aufgabe dadurch, daß der Standfuß einen kreisförmigen, zur Achse koaxialen Vorsprung aufweist, der in eine entsprechend geformte, kreisförmige Ausnehmung am unteren Ende des Zwischenträgers bündig gleitend paßt, daß eine Außenfläche des Spannfutterträgers als Kreiszylindermantelfläche ausgebildet ist, wobei die Kreiszylinderachse mit der zweiten Achse zusammenfällt, daß der Spannfutterträger mit der Außenfläche flächenhaft anliegend an einer entsprechend ausgebildeten Gegenfläche des Zwischenträgers entsprechend der Schwenkbewegung gleitend gelagert und geführt ist, daß am Spannfutterträger eine kreisrunde zur dritten Achse koaxiale Aufnahme eingelassen ist, in die bündig ein Vorsprung des Werkstückhalters paßt, und daß die Klemmvorrichtung ein Kniehebelgestänge aufweist, das sich einerseits am Standfuß und andererseits an einer Verstellwelle abstützt, die koaxial zur zweiten Achse im Spannfutterträger drehbar gelagert ist und als Handhabe zum Festlegen der Drehstellung des Werkstückhalters ausgebildet ist.

Ein Ausführungsbeispiel der Erfindung wird nun anhand der beigefügten Zeichnung näher erläutert.

In der Zeichnung zeigt:

Figur 1 im Querschnitt eine Werkstückhaltevorrichtung.

Figur 2 die Ansicht gemäß dem Pfeil I aus Figur 1,

Figur 3 ausschnittsweise den Schnitt III aus Figur 2,

Figur 4 einen Werkstückhalter,

Figur 5 Teile aus Figur 1 herausgezeichnet,

Figur 6 die Ansicht entsprechend dem Pfeil VI aus Figur 5,

Figur 7 die Vorrichtung in der Seitenansicht für den Beschauer von Figur 1 in verschiedenen Schwenkstellungen des Spannfutterträgers,

Figur 8 die Vorrichtung in der Draufsicht gemäß dem Pfeil VIII aus Figur 2 in verschiedenen Schwenkstellungen des Zwischenträgers,

Figur 9 den Spannfutterträger eines abgeänderten Ausführungsbeispiels, bezogen auf die Winkelstellung entsprechend Figur 1 von oben gesehen,

Figur 10 den Schnitt X aus Figur 9 mit dem abgebrochen dargestellten Abdeckblech,

Figur 11 ein Abdeckblech in der Ansicht entsprechend Figur 10,

Figur 12 die Ansicht gemäß dem Pfeil XII aus Figur 11 und

Figur 13 die der Handhabe 20 entsprechende Handhabe eines abgeänderten Ausführungsbeispiels.

In der Zeichnung ist mit 1 ein massiver Standfuß bezeichnet, der, wie aus Figur 7 ersichtlich, etwa rechteckige Grundfläche hat und Bohrungen 2 zur Aufnahme von Schraubbolzen, mit denen er an einer horizontalen Werkbank festgeschraubt werden kann, aufweist. In dem Standfuß ist um eine erste, vorzugsweise horizontale Achse 3 ein Bolzen 4 schwenkbar gelagert, der an seinem unteren Ende durch eine aufgekonterte Schraube 5 abgestützt ist gegenüber dem Standfuß 1, so daß er Zugkräften nach oben gemäß Pfeil 6 nicht folgen kann.

Auf dem Standfuß 1 ist schwenkbar um die erste Achse 3 ein Zwischenträger 8 gelagert. Der Standfuß weist zu diesem Zweck einen kreisförmigen, zur Achse 3 koaxialen Vorsprung 27 auf, der in eine entsprechend geformte kreisförmige Ausnehmung 32 am unteren Ende des Zwischenträgers bündig gleitend paßt.

Am Zwischenträger 7 ist, schwenkbar um eine zur ersten Achse 3 senkrechte, vorzugsweise vertikale Achse 8 ein Spannfutterträger 9 gelagert. Der Spannfutterträger 9 hat die Form eines Kreiszylinders mit einer sekantalen Abflachung, durch die eine flache Anschlagfläche 10 entsteht, die sich parallel zur zweiten Achse 8 erstreckt. Der Umfang des Spannfutterträgers 9 wird außer durch die Anschlagfläche 10 durch eine Kreiszylindermantelfläche 11 gebildet. Diese Kreiszylindermantelfläche 11 paßt bündig in eine entsprechend kreisförmig geformte Gegenfläche 12 des Zwischenträgers 7. Unter Anlage der Kreiszylindermantelfläche 11 an die Gegenfläche 12 kann der Zwischenträger 7 um die zweite Achse 8 geschwenkt werden.

Am freien Ende des Bolzens 4 ist, schwenkbar um eine Achse 15, die sich parallel zur zweiten Achse 8 erstreckt, ein Kniehebel 16 angelenkt, der sich mit einer an seinem freien Ende angeordneten Backe 17 auf einer Exzenterscheibe 18 abstützt, deren Achse 19 sich senkrecht zur ersten Achse 3 und zur zweiten Achse 8 erstreckt.

Die Exzenterscheibe 18 ist mit einer koaxialen, drehbar im Zwischenträger 7 gelagerten Handhabe 20 befestigt, die ihrerseits von einem von außen zugänglichen Handgriff 21 drehbar ist.

Die Handhabe 20 ist im Zwischenträger 7 drehbar gelagert und gegen axiales Verschieben durch eine Arretierung 22 gesichert.

Im mittleren Bereich des Kniehebels 16 ist eine Zugstange 23 angelenkt schwenkbar um eine Achse 24, die sich parallel zur zweiten Achse 8 erstreckt. Das freie Ende der Zugstange 23 ist am Spannfutterträger 9 koaxial zur zweiten Achse 8 schwenkbar angelenkt.

Wenn die Exzenterscheibe 18 durch Einstellung der Handhabe 20 in eine Stellung gerät, in der sie mit kleinem Radius der Backe 17 gegenübersteht, übt sind keine Kraft auf die Backe 17 aus und die beiden Schwenklager 25 für den Zwischenträger am Standfuß und 26 für den Spannfutterträger am Zwischenträger sind gelöst und können geschwenkt werden. Wird nun die Handhabe 20 gedreht, so daß ein Umfangsstück der Exzenterscheibe 18 mit größerem Radius auf die Backe 17 einwirkt, dann wird die Backe 17 in Pfeilrichtung 28 nach unten getrieben. Dadurch wird durch den Kniehebel 16 die Zugstange 23 in Pfeilrichtung 29 gezogen. Diese Zugkraft stützt sich ab auf dem Bolzen 4. Dadurch wird die Kreiszylindermantelfläche 11 gegen die Gegenfläche 12 gepreßt und der Spannfutterträger 9 am Zwischenträger 7 festgelegt. Gleichzeitig wird dadurch die Oberfläche 30 des Standfußes 1 gegen die Unterfläche 31 des Zwischenträgers 7 gepreßt und dadurch der zwischenträger am Standfuß fixiert. Die Fixierung bleibt so lange aufrechterhalten, bis die Backe 17 nach Verdrehen der Exzenterscheibe 18 wieder nach oben gegen die Pfeilrichtung 28 ausweichen kann.

Die Zugstange 23 weist an ihrem freien Ende einen Ring 33 auf, der eine zur zweiten Achse 8 koaxiale Welle 34, die stationär im Zwischenträger 7 befestigt ist, bündig umgibt.

Für die Zugstange 23 ist im Spannfutterträger 9 ein Schlitz 48 eingelassen, der sich über den Umfangswinkel 49 erstreckt. Dieser Winkel 49 begrenzt die Schwenkbewegung des Spannfutterträgers gegenüber dem Zwischenträger 7, im Ausführungsbeispiel auf 120°. Der Winkel 49 kann auch anders bemessen sein im Bereich zwischen 70 und 160°.

In sämtlichen Schwenkstellungen liegt die Gegenfläche 12 mit einem Winkelbereich gemäß dem Winkel 13 von 100° an der Kreiszylindermantelfläche 11 an. Der Winkel 13 kann auch anders bemessen sein im Bereich zwischen 70 und 120°. Der Umfangsabschnitt, über den sich die Kreiszylindermantelfläche 11 gemäß dem Doppelpfeil 14 erstreckt, beträgt 225°. Der Winkel 14 kann anders bemessen sein im Bereich zwischen 180 und 270°.

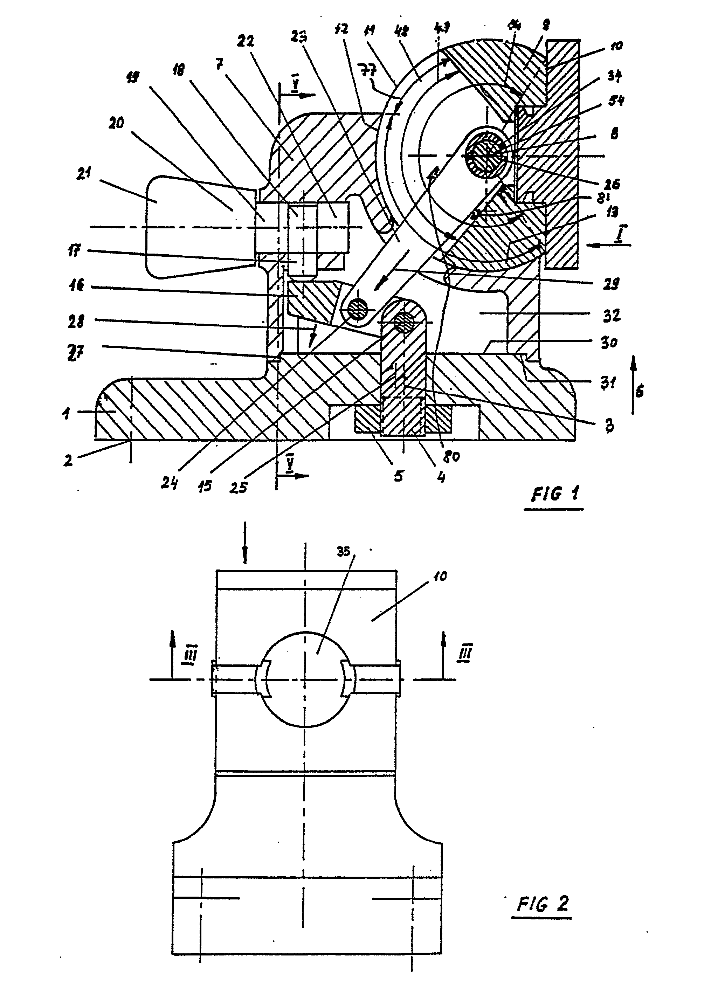

In die Anschlagfläche 10 des Zwischenträgers 7 ist eine kreisrunde Aufnahme 35 eingelassen, deren Zentralachse 36 sich senkrecht zur Anschlagfläche 10 erstreckt. Die Aufnahme 35 ist, wie aus Figur 2 ersichtlich, in der Mitte der Anschlagfläche 10 angeordnet, so daß sich die Achsen 36 und 8 kreuzen.

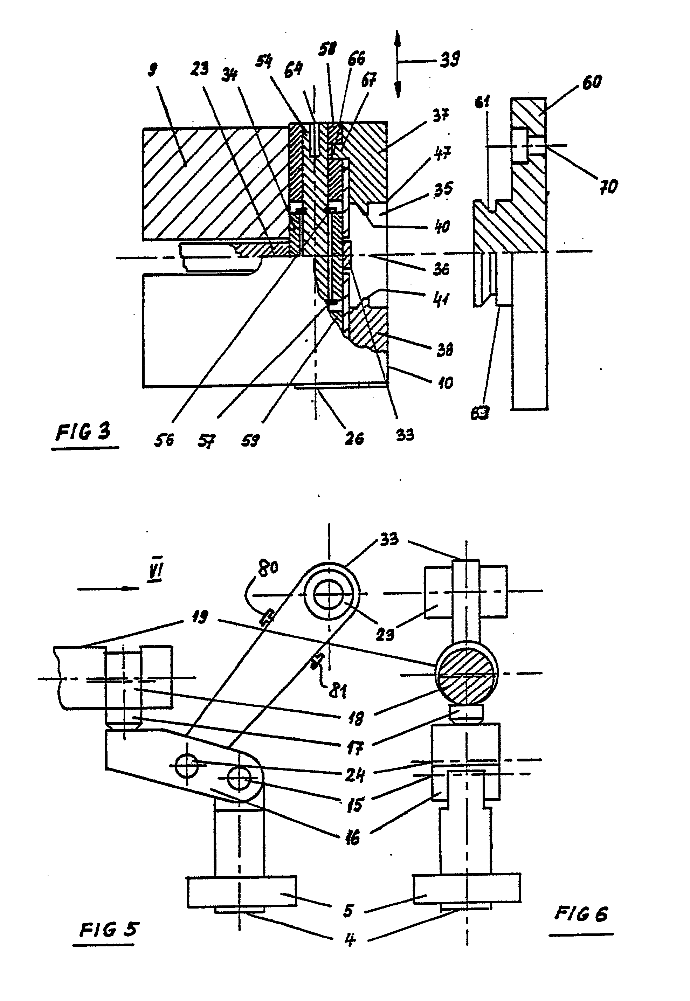

Im Spannfutterträger 9 sind zwei Futterbacken 37, 38 gelagert, die diametral einander gegenüberstehen und aufeinander zu und voneinander weg beweglich sind entsprechend dem Doppelpfeil 39 aus Figur 3. Die beiden Futterbacken weisen gegeneinandergerichtete Vorsprünge 40, 41 auf, die die Form von sich im Umfangsrichtung der Aufnahme 35 erstreckenden Rippen haben.

Koaxial in der als Hohlwelle ausgebildeten Welle 34 steckt drehbar gelagert eine Verstellwelle 54, die durch zwei aufgesteckte Sicherungsringe 56 und 57 gegen axiales Verschieben gesichert ist. Mit 64 ist eine Imbusaufnahme bezeichnet an der einen Stirnseite der Versstellwelle 54 zum Ansetzen eines Imbusschlüssels zum Verdrehen der Verstellwelle. Die Verstellwelle hat an beiden Enden gegenläufiges Außengewinde, auf das die ringförmigen Schieber 58 und 59 aufgeschraubt sind. Die Schieber 58, 59 sind gegen Verdrehen gesichert und weisen je einen Einschnitt, zum Beispiel den Einschnitt 66, auf, in den ein Vorsprung, zum Beispiel der Vorsprung 67, der zugehörigen Futterbacke, zum Beispiel der Futterbacke 37, paßt. Durch Verdrehen der Verstellwelle 54 werden die Futterbacken 37, 38 gegeneinander in Pfeilrichtung 39 verstellt.

Mit 60 ist eine viereckige Anschlagplatte bezeichnet, die an ihrem Umfang verteilt Gewindelöcher, zum Beispiel das Gewindeloch 70, zum Anschrauben eines Werkstückes oder eines Werkstückhalters aufweist. Die Anschlagplatte 60 weist auf ihrer Rückseite einen Vorsprung 63 auf, der kreisrunden Querschnitt hat, bündig in die kreisrunde Aufnahme 35 des Spannfutters 47 paßt und eine den Vorsprüngen 40, 41 der Futterbacken 37, 38 angemessene Ringnut 61 aufweist.

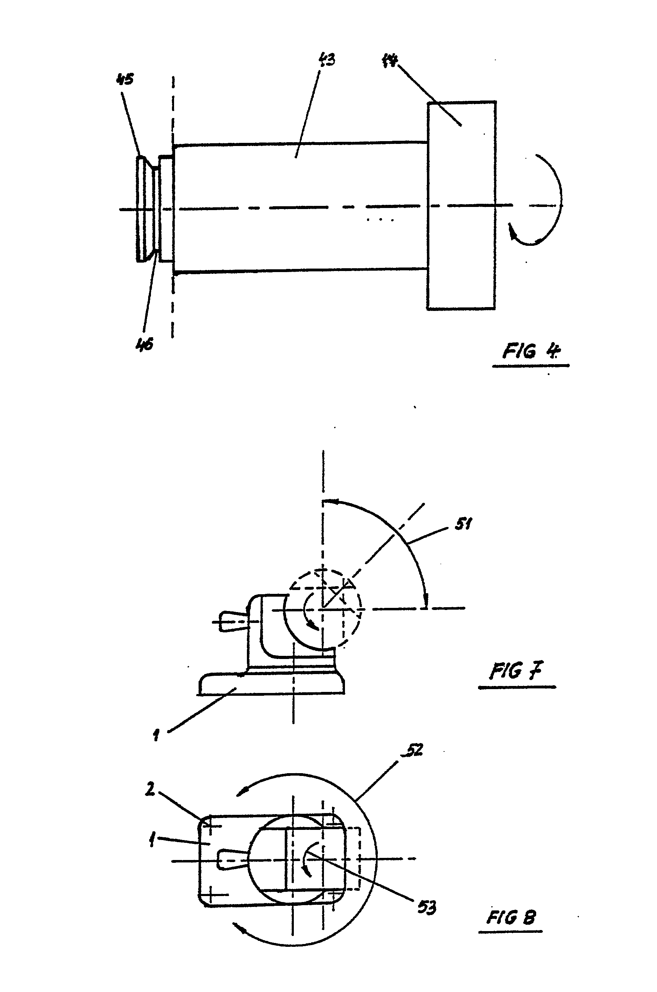

Alternativ zur Anschlagplatte 60 kann auch ein Werkstückhalter 43, wie in Figur 4 dargestellt, eingesetzt werden. Am vorderen freien Ende des schaftförmigen Werkstückhalters 43 ist eine von Hand nachzubearbeitende Elektrode 44 befestigt. Das rückwärtige Ende 45 ist mit kreisrundem Querschnitt ausgestaltet, so daß es bündig in die Aufnahme 35 paßt. Am rückwärtigen Ende ist eine Ringnut 46 eingelassen, die, wenn das rückwärtige Ende in das allgemein mit 47 bezeichnete Spannfutter eingesetzt ist, auf der Höhe der Vorsprünge 40, 41 steht.

Werden die Futterbacken 37, 38 gegeneinandergeschoben, dann passen die Vorsprünge 40, 41 bündig in die Ringnut 46 beziehungsweise 61. Dadurch kann die Anschlagplatte 60 beziehungsweise der Werkstückhalter 43 stramm und präzise in das Spannfutter 47 eingespannt werden. Löst man die Futterbacken 37, 38 etwas, dann bleibt der Werkstückhalter 43 beziehungsweise die Anschlagplatte 60 axial unverschieblich in dem Spannfutter 47, kann aber um die Zentralachse 36 gedreht werden, wodurch ein weiterer, zusätzlicher Freiheitsgrad zur optimalen Einstellung des zu bearbeitenden Werkstückes 44 gewonnen wird.

Einige Stellungen, in die das Werkstück 44 verstellbar ist, sind in den Figuren 6 und 7 angedeutet, und zwar in Figur 6 wie sie sich durch Verschwenken des Spannfutterträgers 9 um die zweite Achse 8 entsprechend den Pfeilen 50, 51 ergeben, und in Figur 7, wie sie sich durch Verschwenken des Zwischenträgers 7 um die erste Achse 3 entsprechend den Pfeilen 52, 53 ergeben.

Die Winkelstellung, in der der Spannfutterträger 9 in Figur 1 gezeichnet ist, in der die Anschlagplatte 60 senkrecht steht, ist durch einen, an der Zugstange 23 gelagerten verstellbaren Anschlag 81 definiert. Die um neunzig Grad verdrehte Winkelstellung des Spannfutterträgers 9, in der die Anschlagplatte 60 waagerecht steht, ist durch einen zweiten an der Zugstange 23 angeordneten justierbaren Anschlag 80 definiert. Die Anschläge 80 und 81 werden so eingestellt, daß der Spannfutterträger in den genannten Winkelstellungen an den Spannfutterträger 9 anschlägt.

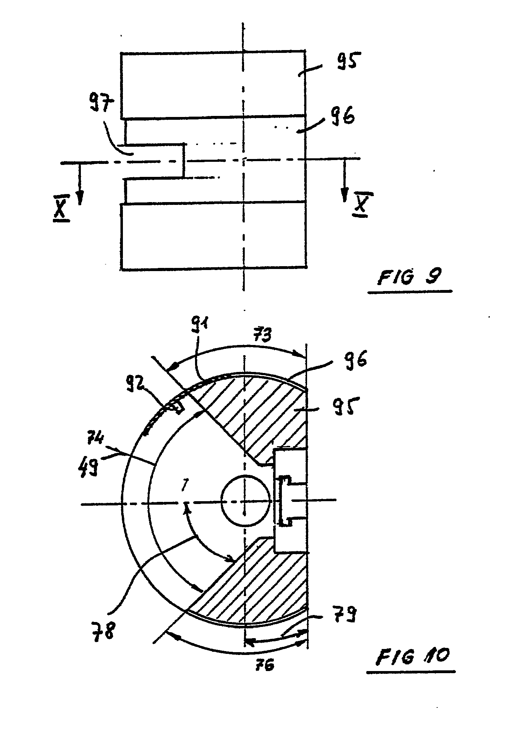

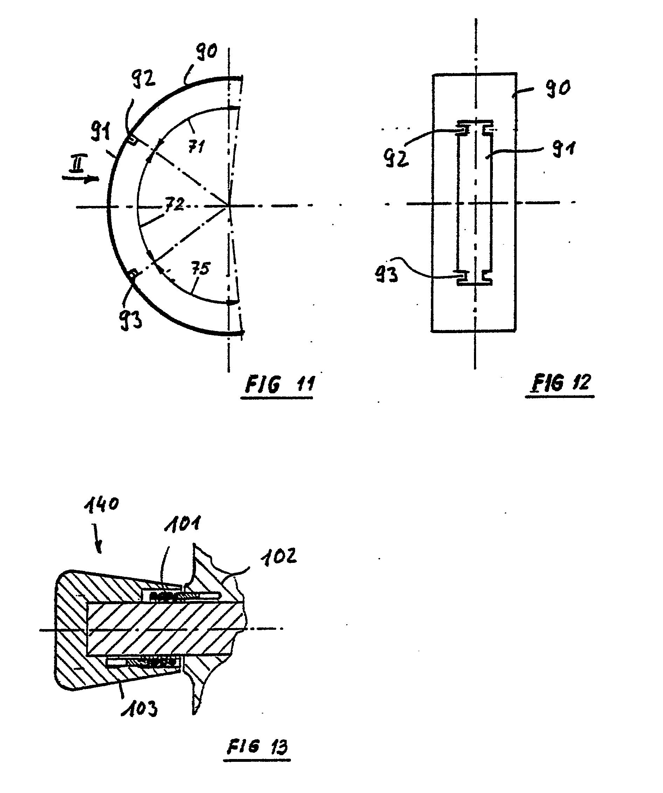

Bei einem zweiten Ausführungsbeispiel ist ein Abdeckblech vorgesehen, durch das der Schlitz 48 nach außen abgedeckt wird, um auf diese Weise mögliche Unfälle. Verschmutzungen oder Bedienungsstörungen zu vermeiden. Die Unterscheide dieses zweiten Ausführungsbeispieles gegenüber dem ersten Ausführungsbeispiel werden nachfolgend anhand der Figur 9 bis 12 erläutert, darüberhinaus ist das zweite Ausführungsbeispiel genauso ausgebildet wie das erste Ausführungsbeispiel.

Der dem Spannfutterträger 9 entsprechende Spannfutterträger 95 weist an seinem Umfang eine Nut 96 auf, die sich koaxial und mittig zum Spannfutterträger erstreckt. Die Nut ist, wie aus Figur 9 ersichtlich, breiter als der dem Schlitz 48 entsprechende Schlitz 97 und erstreckt sich auch über den ganzen kreisförmig gebogenen Umfangsteil des Spannfutterträgers. In diese Nut 96 paßt bündig gleitend ein entsprechend geformtes stabiles Abdeckblech 90, das einen sich mit dem Schlitz 67 in der Breite deckenden Schlitz 91 aufweist, der aber nicht so lang ist wie der Schlitz 97. Der Schlitz 91 erstreckt sich über den durch den Doppelpfeil 72 angezeigten Winkel. An den beiden Enden des Schlitzes sind Anschläge 92 und 93 abgewinkelt, die nach innen gekehrt sind und in dem Schlitz Platz finden. Die Anschläge 92 und 93 schlagen beim Drehen des Spannfutterträgers 9 an diesem an, sodaß nach dem Anschlag das Abdeckblech 90 bei weiterer Drehung des Spannfutterträgers mitgedreht wird. Die der Zugstange 23 entsprechende Zugstange durchsetzt den Schlitz 91 und den Schlitz 97 und bewegt das Abdeckblech beim Verschwenken des Spannfutterträgers 95 gegenüber dem Spannfutterträger, sodaß das Abdeckblech in jeder Stellung des Spannfutterträgers 95 den sonst freiliegenden Teil des Schlitzes 97 nach außen abdeckt. Zu diesem Zweck gelten für die Winkel, die durch die nachfolgende aufgeführten Pfeile gekennzeichnet sind, folgende Beziehungen:

Der Winkel gemäß Pfeil 72 ist kleiner als der Winkel gemäß Pfeil 49.

Der Winkel gemäß Pfeil 71 ist kleiner/gleich dem Winkel gemäß Pfeil 73.

Der Winkel gemäß Pfeil 75 ist kleiner/gleich dem Winkel gemäß Pfeil 76.

Der Winkel gemäß Pfeil 77 ist kleiner/gleich dem Winkel gemäß Pfeil 71.

Die Differenz des Winkels gemäß Pfeil 78 abzüglich dem Winkel gemäß Pfeil 79 ist kleiner/gleich dem Winkel gemäß Pfeil 75.

Die Summe der Winkel gemäß den Pfeilen 71, 72 und 75 ist kleiner als der Winkel gemäß Pfeil 14.

Das dritte Ausführungsbeispiel unterscheidet sich von dem in Figur 1 bis 8 dargestellten Ausführungsbeispiel nur durch eine Rückstellfeder für die Handhabe 20. Diese Rückstellfeder 101 ist eine Schraubenfeder, die einerseits am Gehäuse 102 und andererseits am Handgriff 103 der Handhabe 104 abgestützt ist. Die Rückstellfeder 101 hat das Bestreben, die der Zugstange 23 entsprechende Zugstange in Pfeilrichtung 29 zu ziehen und damit den dem Spannfutterträger 9 entsprechenden Spannfutterträger in seiner eingestellten Winkelstellung zu fixieren. Im übrigen ist dieses dritte Ausführungsbeispiel genauso ausgebildet wie das erste Ausführungsbeispiel, gegebenenfalls mit der Alternative aus dem zweiten Ausführungsbeispiel.

**Patentansprüche**

1. Werkstückhaltevorrichtung
mit einem an einer Werkbank montierbaren Standfuß (1),
mit einem am Standfuß um eine erste Achse (3) schwenkbar gelagerten Zwischenträger (7),
mit einem am Zwischenträger um eine zur ersten Achse senkrechten zweiten Achse (8) schwenkbar gelagerten Spannfutterträger (9),
mit einem am Spannfutterträger um eine zur zweiten Achse senkrechte dritte Achse (36) schwenkbar gelagerten Werkstückhalter (60, 43) und
mit einer Klemmvorrichtung (4, 16, 18, 23) zum Festklemmen von Standfuß, Zwischenträger, Spannfutterträger und Werkstückhalter in der jeweils eingestellten gegenseitigen Schwenkstellung,
wobei die Klemmvorrichtung in Klemmstellung den Spannfutterträger in eine Gegenfläche des Zwischenträgers zieht und als Kraftabstützung demgegenüber den Standfuß gegen den Zwischenträger zieht, dadurch gekennzeichnet,
daß der Standfuß einen kreisförmigen, zur ersten Achse (3) koaxialen Vorsprung (27) aufweist, der in eine entsprechend geformte, kreisförmige Ausnehmung (32) am unteren Ende des Zwischenträgers bündig gleitend paßt,
daß eine Außenfläche (11) des Spannfutterträgers als Kreiszylindermantelfläche ausgebildet ist, wobei die Kreiszylinderachse mit der zweiten Achse (8) zusammenfällt,
daß der Spannfutterträger mit seiner Außenfläche flächenhaft anliegend an der entsprechend ausgebildeten Gegenfläche (12) des Zwischenträgers entsprechend der Schwenkbewegung gleitend gelagert und geführt ist,
daß am Spannfutterträger (9) eine kreisrunde zur dritten Achse (36) koaxiale Aufnahme (35) eingelassen ist, in die bündig ein Vorsprung (63, 45) des Werkstückhalters (43, 60) paßt, und
daß die Klemmvorrichtung ein Kniehebelgestänge (4, 16, 23) aufweist, das sich einerseits am Standfuß (1) und andererseits an einer Verstellwelle (54) abstützt, die koaxial zur zweiten Achse im Spannfutterträger drehbar gelagert ist und als Handhabe zum Festlegen der Drehstellung des Werkstückhalters ausgebildet ist.

2. Werkstückhaltevorrichtung nach Anspruch 1, dadurch gekennzeichnet, daß am Vorsprung (45, 69) des Werkstückhalters (43, 60) eine koaxiale Ringnut (46, 61) vorgesehen ist,

daß in die Ringnut passende Futterbacken (37, 38) am Spannfutterträger (9) aufeinander zubeweglich gelagert sind und

daß die Verstellwelle (54) gegen axiales Verschieben gesichert ist und an ihren beiden Enden gegenläufige Außengewinde aufweist, auf die ringförmige Schieber (58, 59) aufgeschraubt sind, die gegen Verdrehen gesichert im Spannfutterträger gelagert sind und die einen Einschnitt (66) aufweisen, die in einen entsprechenden Vorsprung (67) einer zugeordneten Futterbacke (37, 38) passen.

3. Werkstückhaltevorrichtung nach Anspruch 1 oder 2, dadurch gekennzeichnet,

daß im Standfuß (1) koaxial zur ersten Achse (3) ein Bolzen (4) drehbar gelagert ist, der gegen Zugrichtung zum Zwischenträger (7) am Standfuß abgestützt ist und mit seinem freien Ende zum Zwischenträger ragt,

daß am freien Ende des Bolzens der Kniehebel (16) schwenkbar um eine zur zweiten Achse (8) parallele Achse (15) angelenkt ist, der mit seinem freien Ende (17) auf einem oberhalb des freien Endes angeordneten Exzenter (18) abgestützt ist,

daß der Exzenter mit einer von außen zugänglichen Handhabe (20) drehbar ist, so daß beim Verdrehen Umfangsteile des Exzenters mit unterschiedlichem Radius auf das freie Ende des Kniehebels einwirken, und

daß im mittleren Bereich des Kniehebels eine Zugstange (23) schwenkbar um eine zur zweiten Achse parallele Achse (24) angelenkt ist, die mit ihrem anderen Ende (33) drehbar und koaxial zur zweiten Achse am Spannfutterträger (9) angelenkt ist.

**Claims**

1. Workpiece holding device with a base (1) which can be mounted on a bench, with an intermediate member (7) mounted so as to pivot about a first axis (3) on the base, with a chuck carrier (9) mounted so as to pivot about a second axis (8) at right angles to the first axis on the intermediate member, with a workpiece holder (60, 43) mounted so as to pivot about a third axis (36) at right angles to the second axis on the chuck carrier and with a clamping mechanism (4, 16, 18, 23) for clamping the base, intermediate member, chuck carrier and workpiece holder in the set reciprocal pivotal position, in which the clamping mechanism draws the chuck carrier into a mating surface of the intermediate member in the clamping position and as a force support with respect thereto draws the base against the intermediate member, characterized in that the base has a circular projection (27) coaxial to the first axis (3) and which fits in sliding flush manner in a correspondingly shaped, circular recess (32) on the lower end of the intermediate member, that an outer face (11) of the chuck carrier is constructed as a circular cylinder circumferential surface, in which the circular cylinder axis coincides with the second axis (8), that the chuck carrier is slidingly mounted and guided corresponding to the pivotal movement with its outer face engaging in areal manner on the correspondingly constructed mating face (12) of the intermediate member, that a circular receptacle (35) coaxial to the third axis (36) is formed on the chuck carrier (9) and into which fits in flush manner a projection (63, 45) of the workpiece holder (43, 60) and that the clamping mechanism has a toggle lever linkage (4, 16, 23), which is supported on the one hand on base (1) and on the other on an adjusting shaft (54), which is rotatably mounted in the chuck carrier coaxially to the second axis and which is constructed as a handle for fixing the rotary position of the workpiece holder.

2. Workpiece holding device according to claim 1, characterized in that a coaxial annular groove (46, 61) is provided on the projection (45, 69) of the workpiece holder (43, 60), that chuck jaws (37, 38) fitting in the annular groove are mounted so as to move towards one another on the chuck carrier (9) and that the adjusting shaft (54) is locked against axial displacement and has on its two ends oppositely directed external threads onto which the circular slides (58, 59) are screwed, which are mounted in the chuck carrier so as not to rotate and which have a cutout (66) and which fit into a corresponding projection (67) of an associated chuck jaw (37, 38).

3. Workpiece holding device according to claims 1 or 2, characterized in that a bolt (4) is mounted in rotary manner coaxial to the first axis (3) in the base (1) and is supported on the latter counter to the pulling direction towards the intermediate member (7) and projects with its free end towards the latter, that on the free end of the bolt is articulated the toggle lever (16) so as to pivot about an axis (15) parallel to the second axis (8) and which is supported with its free end (17) on an eccentric (18) positioned above the free end, that the eccentric is rotatable with a handle (20) accessible from the outside, so that during rotation circumferential parts of the eccentric with different radius act on the free end of the toggle lever and that in the central area of the toggle lever is articulated a tie rod (23) so as to pivot about an axis (24) parallel to the second axis and whose other end (33) is articulated in rotary manner to chuck carrier (9) coaxial to the second axis.

**Revendications**

1. Dispositif de support pour pièce à usiner, comprenant un socle (1) pouvant être monté sur un établi,

comprenant un support intermédiaire (7) monté sur le socle en pouvant pivoter autour d'un premier axe (3),

comprenant un porte-mandrin (9) monté sur le support intermédiaire en pouvant pivoter autour d'un deuxième axe (8) perpendiculaire au premier axe,

comprenant un porte-outil (60, 43) monté sur le porte-mandrin en pouvant pivoter autour d'un troisième axe (36) perpendiculaire au deuxième axe,

comprenant un dispositif de serrage (4, 16, 18, 23) pour bloquer le socle, le support intermédiaire, le porte-mandrin et le porte-outil dans leur position mutuelle de pivotement qui a été réglée à chaque fois, cependant que, dans sa position de blocage, le dispositif de serrage tire le porte-mandrin dans une contre-surface du support intermédiaire et qu'il tire le socle contre le support intermédiaire par report des forces sur celui-ci, caractérisé par le fait que:

le socle comporte une saillie circulaire (27) qui est coaxiale au premier axe (3) et qui s'ajuste de niveau avec glissement dans un évidement circulaire (32) de forme correspondante ménagé à l'extrémité inférieure du support intermédiaire,

par le fait qu'une surface extérieure (11) du porte-mandrin est réalisée sous la forme d'une surface-enveloppe en cylindre de révolution, l'axe du cylindre de révolution coïncidant avec le deuxième axe (8),

par le fait que le porte-mandrin, par sa surface extérieure, est monté tournant par glissement et guidé par contact de surfaces, en fonction du mouvement de pivotement, en s'appuyant sur la contre-surface (12) réalisée en conséquence du support intermédiaire,

par le fait qu'est ménagé dans le porte-mandrin (9) un logement circulaire (35) qui est coaxial au troisième axe (36) et dans lequel s'ajuste de niveau une partie en saillie (63, 45) du porte-outil (43, 60), et:

par le fait que le dispositif de serrage comporte une timonerie à genouillère (4, 16, 23) s'appuyant sur le socle (1), d'une part, et, d'autre part, sur un arbre de déplacement (54) qui est monté tournant dans le porte-mandrin de manière coaxiale au deuxième axe et qui est réalisé sous la forme d'une manette pour bloquer la position en rotation du porte-outil.

2. Dispositif de support pour pièce à usiner selon la revendication 1, caractérisé:

par le fait qu'une rainure coaxiale (46, 61) est prévue sur la partie en saillie (45, 69) du porte-outil (43, 60),

par le fait que des mâchoires de mandrin (37, 38) qui s'ajustent dans la rainure annulaire sont montées sur le porte-mandrin (9) en pouvant se déplacer l'une par rapport à l'autre, et:

par le fait que l'arbre de déplacement (54) est empêché de se déplacer axialement et qu'il comporte à ses deux extrémités des filetages extérieurs de sens opposés sur lesquels sont vissés de coulisseaux annulaires (58, 59) qui sont montés dans le porte-mandrin en étant empêchés de tourner et qui comportent une entaille (66) s'ajustant dans une partie en saillie correspondante (67) d'une mâchoire de mandrin associée (37, 38).

3. Dispositif de support pour pièce à usiner selon la revendication 1 ou 2, caractérisé:

par le fait qu'un goujon (4) est monté tournant dans le socle (1) de manière coaxiale au premier axe (3), qu'il s'appuie sur le socle à l'opposé de la direction de traction vers le support intermédiaire (7), et qu'il fait saillie par son extrémité libre vers le support intermédiaire,

par le fait que la genouillère (16) est articulée à l'extrémité libre du goujon en pouvant pivoter autour d'un axe (15) parallèle au deuxième axe (8), et qu'elle s'appuie par son extrémité libre (17) sur un excentrique (18) disposé au-dessus de l'extrémité libre,

par le fait que l'excentrique peut être tourné par une manette (20) accessible de l'extérieur, de sorte que, lors de la rotation, des parties du pourtour de l'excentrique présentant des rayons différents agissent sur l'extrémité libre de la genouillère, et:

par le fait qu'une barre de traction (23) est articulée dans la région centrale de la genouillère en pouvant pivoter autour d'un axe (24) parallèle au deuxième axe, et qu'elle est articulée par son autre extrémité (33) sur le porte-mandrin (9) de manière tournante et coaxiale au deuxième axe.

FIG 1

FIG 2

FIG 3

FIG 5

FIG 6

45

43

44

FIG 4

46

51

FIG 7

1

2

52

1

53

FIG 8

95

97

96

X          X

*FIG 9*

91    73
92          96
            95
74
49
7
78
79
76

*FIG 10*

EP 0 223 981 B1

FIG 11

FIG 12

FIG 13